# EUROPEAN PATENT APPLICATION

(11) **EP 2 737 960 A1**
(43) Date of publication of application: **04.06.2014**
(21) Application number: 13172449.4
(22) Date of filing: 18.06.2013
(51) Int. Cl.: B05D 1/18, F16B 33/00, B05D 3/02

(54) **Screw and method for manufacturing the same**

(30) Priority: 03.12.2012 TW 101145249
(71) Applicant: Sol Full International, Ltd., Kaoshiung City 820 (TW)
(72) Inventor: Hu, Ming-Feng, 824 Kaohsiung City (TW); Hsieh, Chih-Chun, 244 New Taipei City (TW)
(74) Representative: Regimbeau

(57) **Abstract**

A method for manufacturing a screw includes the following steps of: providing a screw body (3) having an outer surface and including a head portion (31) and a shank portion (32) that extends from the head portion (31); immersing the screw body (3) into a solution composed of diethylene glycol monobutyl ether acetate, water borne organic-inorganic copolymer resin and water; and removing the screw body (3) from the solution, followed by baking the screw so as to form a transparent layer (41) on the screw body (3).

## Description

The invention relates to a screw and a method for manufacturing the same, more particularly to a bimetal screw and a method for manufacturing the same.

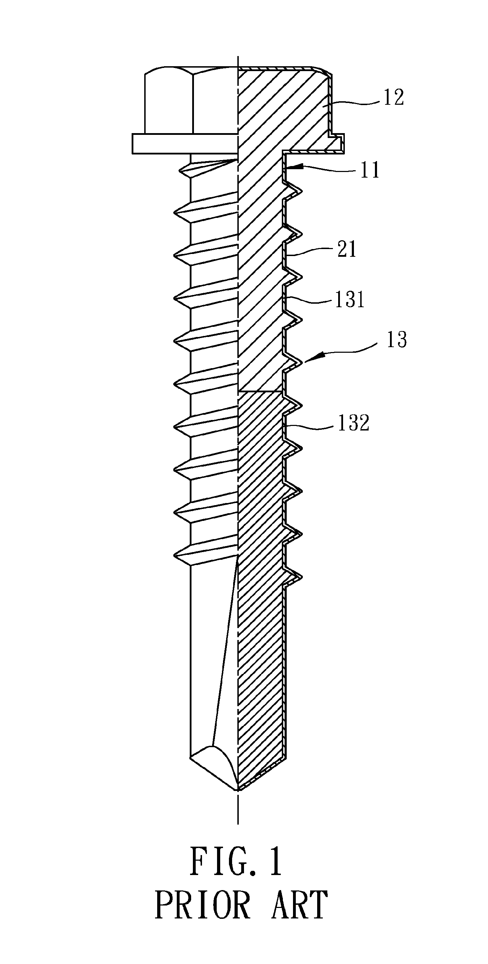

Referring to Figure 1, a conventional screw includes a screw body 11 and a protecting layer 21 formed on an outer surface of the screw body 11. The screw body 11 includes a head portion 12 and a shank portion 13 extended from the head portion 12. The shank portion 13 has a first segment 131 which is connected to the head portion 12 and a second segment 132 which is connected to the first segment 131. The head portion 12 and the first segment 131 of the shank portion 13 are made of austenitic stainless steel which provides a superior anti-corrosion capability, and the second segment 132 of the shank portion 13 is made of low carbon steel which provides a superior drilling ability. The protective layer 21 can be coated on the outer surface of the screw body 11 by electroplating or by painting, so as to increase the anti-corrosion ability of the conventional screw. A carburizing process is usually performed on a surface of the second segment 132 for improving the surface hardness thereof.

During electroplating or painting the protective layer 21, a baking process is required to be conducted under a temperature ranging from 200°C to 220°C. The high temperature results in re-annealing of the steel material and adversely affects the hardness and drilling ability thereof. In practical testing, the conventional screw only has ability to drill through a steel plate that has a thickness less than 5mm, and cannot be used to drill through a stainless steel plate. Moreover, the electroplating or painting process causes massive environmental pollution and increases the production cost of the conventional screw. Furthermore, the inaccuracy of the carburizing process often results in the surface carburization of the first segment 131 instead of merely the second segment 132, thereby affecting the anti-corrosion ability of the first segment 131.

Therefore, the object of the present invention is to provide a screw that may alleviate the aforesaid drawbacks of the prior art.

According to one aspect of the present invention, a method for manufacturing a screw includes the following steps of:
(a) providing a screw body that has an outer surface and that includes a head portion and a shank portion extending from the head portion;
(b) immersing the screw body into a solution that is composed of diethylene glycol monobutyl ether acetate, water borne organic-inorganic copolymer resin, and water; and
(c) removing the screw body from the solution, followed by drying and baking the screw body so as to form a transparent layer on the outer surface of the screw body.

According to another aspect of the present invention, a screw includes:
a screw body having an outer surface and including a head portion and a shank portion that extends from the head portion; and
a transparent layer formed on an outer surface of the screw body and composed of diethylene glycol monobutyl ether acetate and water borne organic-inorganic copolymer resin.

Other features and advantages of the present invention will become apparent in the following detailed description of the preferred embodiment with reference to the accompanying drawings, of which:
Figure 1 is a partly sectional view of a conventional screw;
Figure 2 is a flow chart illustrating the preferred embodiment of a method for manufacturing a screw according to the present invention; and
Figure 3 is a partly sectional view of the preferred embodiment of a screw according to the present invention.

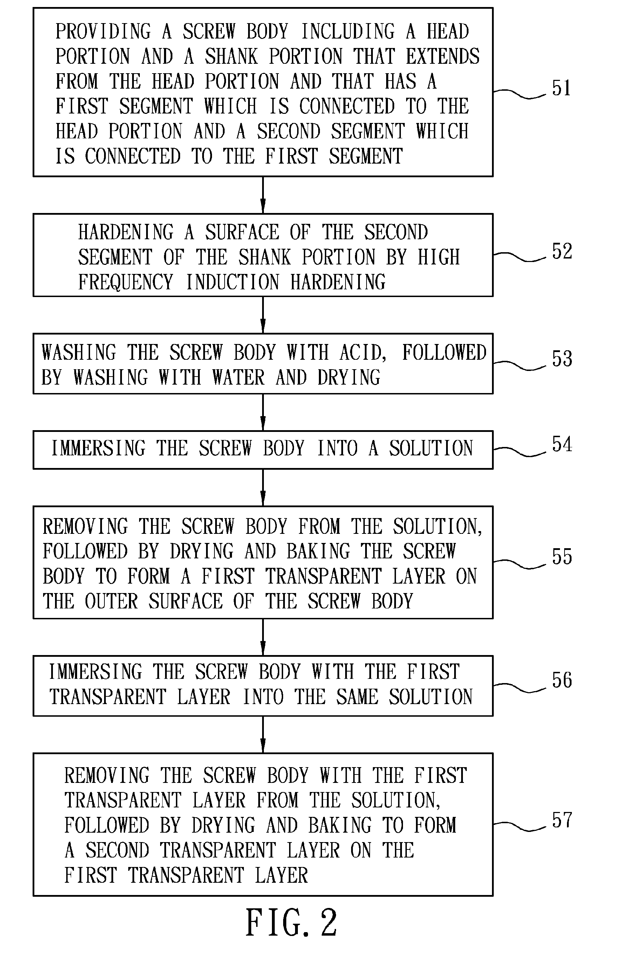

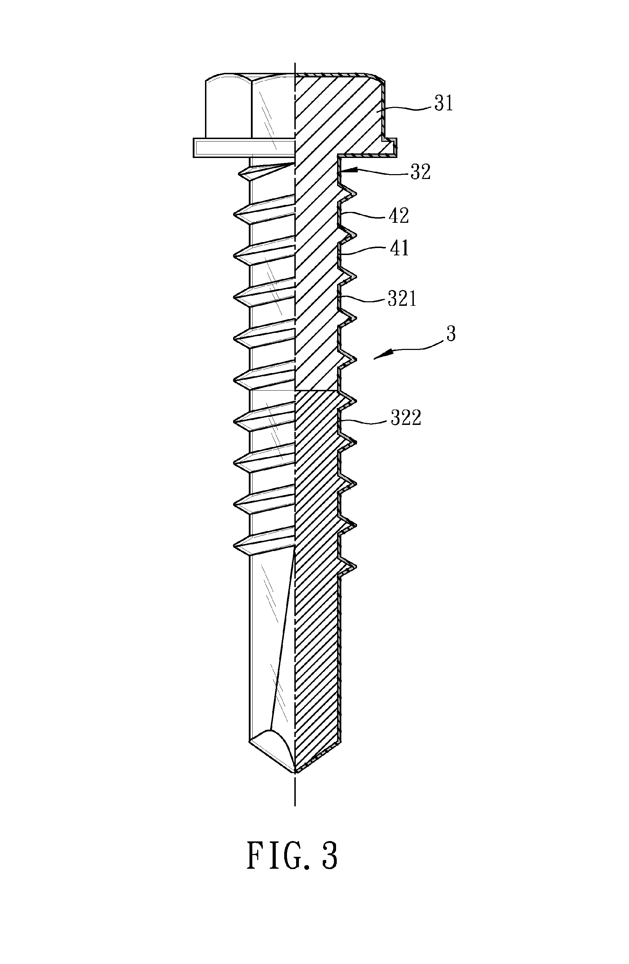

Referring to Figures 2 and 3, the preferred embodiment of a method for manufacturing a screw according to the present invention is shown to include steps 51 to 57.

At Step 51, a screw body 3 is provided. The screw body 3 has an outer surface and includes a head portion 31 and a shank portion 32 that extends from the head portion 31 and that has a first segment 321 which is connected to the head portion 31, and a second segment 322 which is connected to the first segment 321. The head portion 31 and the first segment 321 of the shank portion 32 are made of an austenitic stainless steel, and the second segment 322 of the shank portion 32 is made of a Cr-Mo alloy steel. Preferably, the head portion 31 and the first segment 321 of the shank portion 32 are made of one of SUS304 stainless steel and SUS3016 stainless steel, and the second segment 322 of the shank portion 32 is made of one of SCM435 Cr-Mo alloy steel and SCM440 Cr-Mo alloy steel. Due to the material property of each of the first and second segments 321 and 322 of the shank portion 32, the surface color of the second segment 322 is darker than that of the first segment 321.

At Step 52, a surface of the second segment 322 of the shank portion 32 is hardened by a high frequency induction hardening method. Since the high frequency induction hardening method has higher accuracy than a conventional carburizing method and is suitable for the Cr-Mo alloy steel, it is easier to precisely perform the hardening method on the second segment 322 of the screw body 3 without affecting the first segment 321.

At Step 53, the outer surface of the screw body 3 is washed with acid. In this embodiment, the screw body 3 is immersed into an acid solution with a pH value ranging from 1 to 2 for 3 to 5 minutes. The acid solution can be a nitric acid solution, a hydrochloric acid solution, and so forth. The screw body 3 is removed from the acid solution and washed with water to remove the acid solution and impurities, followed by drying the screw body 3 at a temperature under 80°C.

At Step 54, the screw body 3 is immersed into a solution at room temperature for 10 to 20 seconds, wherein the solution is composed of diethylene glycol monobutyl ether acetate, water borne organic-inorganic copolymer resin, and water. Preferably, based on the total weight of the solution, the weight percentage of diethylene glycol monobutyl ether acetate ranges from 10 wt% to 20 wt%, the weight percentage of water borne organic-inorganic copolymer resin ranges from 15 wt% to 30 wt%, and the weight percentage of water ranges from 50 wt% to 75 wt%. In this embodiment, the weight percentage of diethylene glycol monobutyl ether acetate is 15 wt%, the weight percentage of water borne organic-inorganic copolymer resin is 22 wt%, and the weight percentage of water is 63 wt%.

At Step 55, the screw body 3 is removed from the solution, followed by centrifuging and baking the screw body 3 at a temperature ranging from 80°C to 110°C for 20 minutes, so as to form a uniform first transparent layer 41 on the outer surface of the screw body 3. Such temperature is lower than the conventional annealing temperature for steels or alloy steels and does not lower the hardness of the second segment 322 of the screw body 3 so as to achieve a higher production yield of the screw of the present invention.

At Step 56, the screw body 3 with the first transparent layer 41 is immersed into the same solution at room temperature for 10 to 20 seconds.

At Step 57, the screw body 3 is removed from the solution, followed by centrifuging and baking at a temperature ranging from 80°C to 110°C for 20 minutes, so as to form a uniform second transparent layer 42 on the first transparent layer 41.

The resultant screw according to the present invention includes the screw body 3, the first transparent layer 41, and the second transparent layer 42. Each of the first and second transparent layers 41 and 42 is composed of diethylene glycol monobutyl ether acetate and water borne organic-inorganic copolymer resin.

The first and second transparent layers 41 and 42 of the screw have good lubricity and low friction due to the compositions thereof. Therefore, the first and second transparent layers 41 and 42 of the screw are capable of not only protecting the screw body 3 from corrosion but also increasing the drilling ability of the screw. Further, no electroplating or painting process is needed, thereby reducing the environmental pollution and the production cost of the screw, while maintaining the hardness of the second segment 322 and the production yield of the screw. In practical testing, the actual cost of the screw of the present invention is 16% lower than that of the conventional screw and is capable of drilling through a steel plate that has a thickness less than 17mm or through a stainless steel plate that has a thickness less than 6mm.

## Claims

1. A method for manufacturing a screw, **characterized by** the following steps of:
(a) providing a screw body (3) that has an outer surface and that includes a head portion (31) and a shank portion (32) extending from the head portion (31);
(b) immersing the screw body (3) into a solution that is composed of diethylene glycol monobutyl ether acetate, water borne organic-inorganic copolymer resin, and water; and
(c) removing the screw body (3) from the solution, followed by drying and baking the screw body (3) so as to form a first transparent layer (41) on the outer surface of the screw body (3).

2. The method as claimed in Claim 1, further **characterized in that**, in step (a), the shank portion (32) of the screw body (3) has a first segment (321) which is connected to the head portion (31), and a second segment (322) which is connected to the first segment (321), the head portion (31) and the first segment (321) of the shank portion (32) being made of an austenitic stainless steel, the second segment (322) of the shank portion (32) being made of a Cr-Mo alloy steel.

3. The method as claimed in any one of Claims 1 and 2, further **characterized by** repeating steps (b) and (c) so as to form a second transparent layer (42) on the first transparent layer (41).

4. The method as claimed in any one of Claims 1 to 3, further **characterized in that**, in step (b), based on the total weight of the solution, the percentage of diethylene glycol monobutyl ether acetate ranges from 10 wt% to 20 wt%, the percentage of water borne organic-inorganic copolymer resin ranges from 15 wt% to 30 wt%, and the percentage of water ranges from 50 wt% to 75 wt%.

5. The method as claimed in Claim 4, further **characterized in that**, in step (b), based on the total weight of the solution, the percentage of diethylene glycol monobutyl ether acetate is 15 wt%, the percentage of water borne organic-inorganic copolymer resin is 22 wt%, and the percentage of water is 63 wt%.

6. The method as claimed in any one of Claims 1 to 5, further **characterized in that**, in step (b), the temperature of the solution ranges from 20 °C to 30 °C, and the immersion time for the screw body (3) in the solution ranges from 10 seconds to 20 seconds.

7. The method as claimed in any one of Claims 1 to 6, further **characterized in that**, in step (c), the screw body (3) is baked for 20 minutes at a temperature ranging from 80°C to 110°C.

8. The method as claimed in Claim 2, further **characterized by** a step (a1) of hardening a surface of the second segment (322) of the shank portion (32) by high frequency induction hardening prior to step (b).

9. The method as claimed in Claim 8, further **characterized by** a step (a2) of washing the outer surface of the screw body (3) with acid after step (a1) and before step (b).

10. The method as claimed in any one of Claims 2, 8, and 9, further **characterized in that**, in step (a), the austenitic stainless steel is one of SUS304 stainless steel and SUS316 stainless steel, and the Cr-Mo alloy steel is one of SCM435 alloy steel and SCM440 alloy steel.

11. A screw including a screw body (3) that has an outer surface and that includes a head portion (31) and a shank portion (32) which extends from said head portion (31),
**characterized by** a first transparent layer (41) formed on said outer surface of said screw body (3) and composed of diethylene glycol monobutyl ether acetate and water borne organic-inorganic copolymer resin.

12. The screw as claimed in Claim 11, further **characterized in that** said shank portion (31) has a first segment (321) that is connected to said head portion (31), and a second segment (322) that is connected to said first segment (321), said head portion (31) and said first segment (321) being made of an austenitic stainless steel, said second segment (322) of said shank portion (32) being made of a Cr-Mo alloy steel.

13. The screw as claimed in any one of Claims 11 and 12, further **characterized by** a second transparent layer (42) formed on said first transparent layer (41) and composed of diethylene glycol monobutyl ether acetate and water borne organic-inorganic copolymer resin.

14. The screw as claimed in any one of Claims 12 and 13, further **characterized in that** the austenitic stainless steel is one of SUS304 stainless steel and SUS316 stainless steel, and the Cr-Mo alloy steel is one of SCM435 alloy steel and SCM440 alloy steel.
